# EUROPÄISCHE PATENTSCHRIFT

(11) **EP 0 598 942 B1**
(45) Veröffentlichungstag und Bekanntmachung des Hinweises auf die Patenterteilung: **17.01.1996**
(21) Anmeldenummer: 92120230.5
(22) Anmeldetag: 26.11.1992
(51) Int. Cl.: B60H 1/00, F24F 13/14

(54) **Luftklappe für eine Heiz- und/oder Klimaanlage, insbesondere in einem Kraftfahrzeug**
Air damper for heating and/or air conditioning, particularly for a motor vehicle
Clapet d'air pour le chauffage et/ou la climatisation, particulièrement pour une voiture automobile

(43) Veröffentlichungstag der Anmeldung: 01.06.1994
(73) Patentinhaber: SIEMENS AKTIENGESELLSCHAFT, D-80333 München (DE)
(72) Erfinder: Schwarz, Stefan, Dipl.-Ing. (FH), W-8630 Coburg (DE)

(56) Entgegenhaltungen:
- DE-U- 8 535 924
- DE-U- 8 716 119
- DE-U- 8 911 657
- DE-U- 9 016 703
- FR-A- 2 341 083
- FR-A- 2 383 368
- FR-A- 2 550 848

## Beschreibung

Die Erfindung bezieht sich auf eine Luftklappe für eine Heiz- und/oder Klimaanlage, insbesondere in einem Kraftfahrzeug gemäß Anspruch 1.

Durch die DE-U-89 11 657 ist eine Luftklappe für eine Heiz- und/oder Klimaanlage in einem Kraftfahrzeug mit einem plattenförmigen Grundkörper und einem umspritzten elastischen Dichtungsprofil aus einem thermoplastischen Elastomer bekannt; zur dichtenden Anlage der Luftklappe an einem Wandungsteil der Heizungs- und/oder Klimaanlage weist die Luftklappe eine Dichtungslippe mit kreisförmigem vollquerschnitt auf.

Darüber hinaus sind auch Dichtungsleisten mit in ihrer Erstreckungsrichtung verlaufendem Hohlkörper bekannt, die als schlauchartige Einzelteile über eine entsprechende randseitige Profilierung des Grundkörpers aufgespannt werden. Weiterhin sind Doppel-Dichtlippen mit je einer in spitzem Winkel zum Außenrand des Grundkörpers abstehenden freien Dichtungswand bekannt.

Gemäß Aufgabe vorliegender Erfindung soll eine Luftklappe geschaffen werden, die bei einfachster Fertigungstechnik über ihre gesamte Anlagefläche sowohl eine hohe Dichtigkeit, als auch eine große Geräuscharmut gegenüber dem umströmenden Medium gewährleisten kann; eine derartige Luftklappe ist erfindungsgemäß dadurch möglich, daß an die Dichtungsränder der Luftklappe eine elastische Dichtungsleiste mit zumindest einem, in Erstreckungsrichtung der Dichtungsleiste verlaufenden, nach dem Gasinjektions-Verfahren hergestellten Hohlkörper angespritzt ist; vorteilhafte Ausgestaltungen der Erfindung sind jeweils Gegenstand der Unteransprüche.

Die mit einer angespritzten erfindungsgemäßen Dichtungsleiste ausgestattete Luftklappe zeichnet sich einerseits durch eine hohe dichtende Anschmiegsamkeit an das abzudichtende Gegenrandprofil aus ohne andererseits Gefahr zu laufen, aufgrund zu großer Materialanhäufung sich zu verziehen bzw. durch Flattererscheinungen im umströmenden Medium Anlaß zu unerwünschter Geräuschbildung zu geben.

Bei einer Dichtungsleiste mit im wesentlichen dreieckförmigem Hohlkörper mit zwei zueinander spitzwinkelig zu dem Grundkörper verlaufenden Dichtungswandungen und einer diese verbindenden Grundwandung wird einerseits eine Doppel-Dichtlippe mit dünnen elastisch schmiegsamen Anlage-Wandteilen geschaffen, die jedoch andererseits aufgrund der stabilisierenden beide Endbereiche der Dichtungswandteile verbindenden Grundwandung nicht zu Flattererscheinungen führen kann; durch einen unsymmetrischen Hohlkörper kann einerseits ein im Sinne einer maximalen Dichtigkeit anschmiegsamer Dichtungswandteil und ein im Sinne eines minimalen Strömungswiderstandes gegenüber dem umströmenden Medium geformter abschließender übriger Wandteil des Hohlkörpers erreicht werden.

In sämtlichen vorgenannten Fällen kann in fertigungstechnisch besonders aufwandsarmer Weise beim Anspritzen der in seinen Außenkonturen durch die Spritzform festlegbaren Dichtungsleiste der in Erstreckungsrichtung verlaufende Hohlkörper nach dem Gasinjektions-Verfahren in einem Arbeitsgang, wie dies z.B. durch die DE-U-90 16 703 zur Herstellung eines nach dem Gasinjektions-Verfahrens spritzgegossenen Kunststoff-Rohrformteils bekannt ist, hergestellt werden.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die Draufsicht auf eine mit einer Dichtungsleiste umrandete Luftklappe in einer Heiz- und/oder Klimaanlage eines Kraftfahrzeugs
- FIG 2: die Luftklappe gemäß FIG 1 im Schnittverlauf II-II in FIG 1
- FIG 3: eine erste zur Darstellung in FIG 2 alternative Dichtungsleiste
- FIG 4: eine zweite zur Darstellung in FIG 2 alternative Dichtungsleiste.
- FIG 5-7: drei verschiedene Dichtungsleisten bekannter Art.

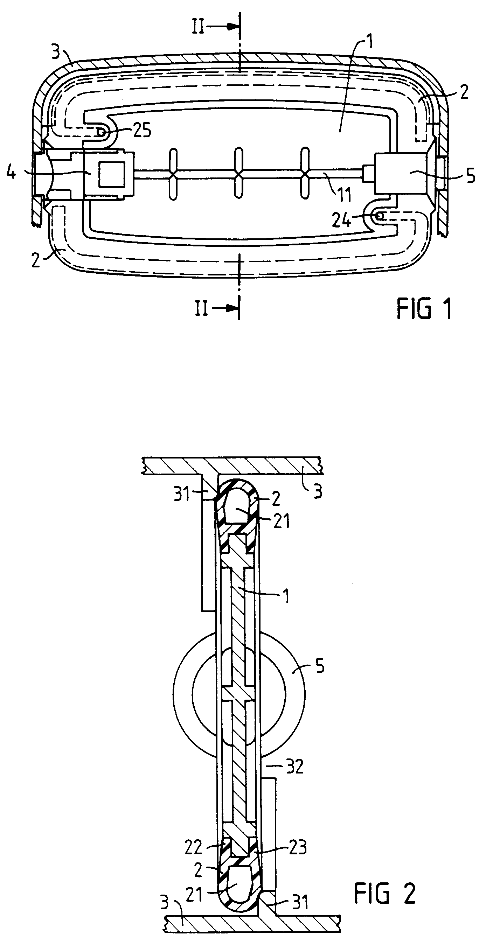

FIG 1 zeigt die Draufsicht auf eine Luftklappe für eine Heizungs- und/oder Klimaanlage in einem Kraftfahrzeug mit einem um eine Schwenkachse 11 mit beidendseitigen Schwenklagern 4 bzw.5 schwenkbaren Luftklappen-Grundkörper 1 und einer an dessen Außenkante umlaufenden Dichtungsleiste 2. FIG 2 zeigt im Schnittverlauf II-II gemäß FIG 1 die Luftklappe in ihrer einen Schließstellung, in der sie mit der umlaufenden Dichtungsleiste 2 an Anschlagkanten 31 eines Luftkanales 3 der Heizungs- und/oder Klimaanlage anliegt.

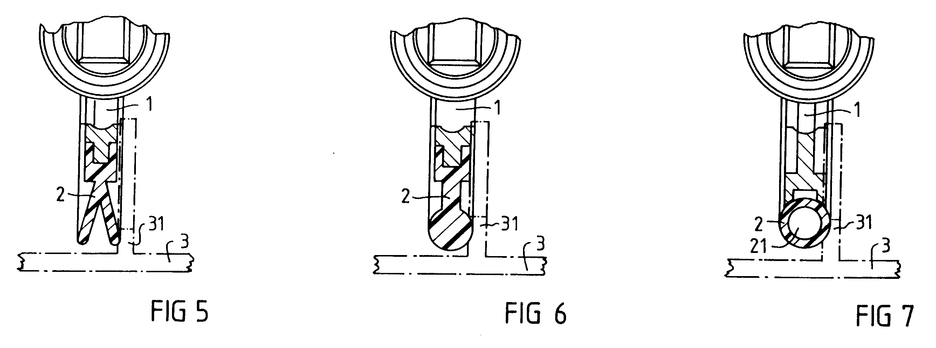

FIG 5-7 zeigen drei bekannte Ausführungen einer an einen Luftklappen-Grundkörper 1 angespritzten Dichtungsleiste 2. Gemäß FIG 5 besteht die Dichtungsleiste 2 aus zwei im spitzen Winkel zum Außenrand des Luftklappen-Grundkörpers 1 frei abstehenden Dichtungswandungen, die jeweils mit ihren freien Enden an Anschlagkanten 31 eines Luftkanals 3 anliegen; soll bei einer derartigen Dichtungsleiste eine hohe Anschmiegsamkeit gewährleistet werden, müssen die Dichtungswandungen möglichst dünnwandig sein, was jedoch zu Flatterbewegungen und damit zu unerwünschten Geräuschbildungen in dem zu fördernden Medium führt.

FIG 6 zeigt eine demgegenüber versteifte angespritzte Dichtungsleiste 2 mit einer Dichtlippe mit kreisförmigem Vollprofil; in einem solchen Fall ist zwar bis zu einem gewissen Grade Schutz gegen unerwünschte Flatterbewegungen im anströmenden Medium gewährleistet, jedoch besteht die Gefahr einer eine hohe Anlagegenauigkeit behindernden Verwerfung, insbesondere bei längeren Dichtungskanten.

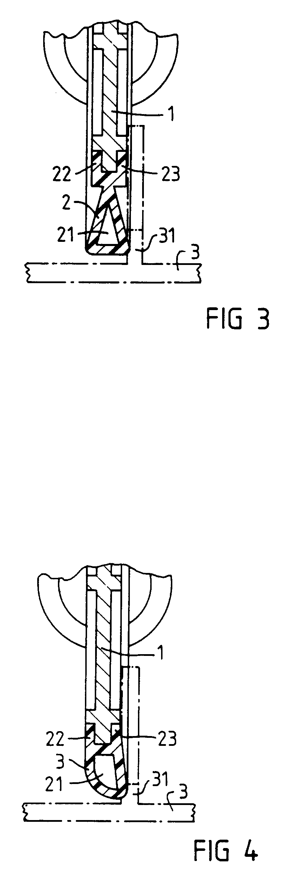

FIG 3 zeigt eine höhere Anschmiegsamkeit der Dichtungsleiste 2 im Vergleich zu FIG 6 und eine höhere Steifigkeit im Vergleich zu FIG 3, jedoch ist die kreisförmige, mit kreisförmigem Hohlraum 21 hergestellte Dichtungslippe nur als getrenntes Bauteil um einen entsprechend ausgebildeten Formrand des Luftklappen-Grundkörpers 1 spannbar vorgesehen.

Im Gegensatz dazu zeigen FIG 2-4 erfindungsgemäß ausgebildete Dichtungsleisten 2 mit beim Anspritzen an den Außenrand des Luftklappen-Grundkörpers 1 nach dem Gasinjektions-Verfahren gleichzeitig hergestellten Hohkörpers 21 der - wie insbes. aus FIG 1 ersichtlich - als Gasinnendruckkanal in Erstreckungsrichtung der Dichtungsleiste 2 verläuft und Injektionsöffnungen 24 bzw. 25 aufweist, in die zur Herstellung der Hohlkörper 21 beim Spritzgießen der umlaufenden Dichtungsleiste 2 eine Gasinduktionsnadel angesetzt werden kann.

Der Luftklappen-Grundkörper 1 besteht zweckmäßigerweise aus einem plattenförmigen harten Kunststoffteil bzw. aus einem plattenförmigen Metallteil, an dessen Außenrand die jeweilige Dichtungsleiste 2 mit seitlichen Haltwandteilen 22,23 und mit einem vor einer randseitigen Außenkante verlaufenden Hohlkörper 21 einstückig angespritzt ist.

FIG 2 zeigt einen im wesentlichen symmetrischen Hohlkörper 21, während gemäß FIG 4 der Hohlkörper 21 im Sinne einer möglichst großflächigen, an der Anschlagkante 31 des Lüftungsgehäuses 3 anliegenden Dichtungswandung und einem übrigen im Sinne einer geräuscharmen Umströmung durch das abzuschließende Medium ausgebildeten Wandung besteht.

FIG 3 zeigt eine zunächst gemäß FIG 5 mit zwei im spitzen Winkel zur Außenkante des Luftklappen-Grundkörpers 1 abstehenden Dichtungswandungen, die jedoch aufgrund der erfindungsgemäßen Ausbildung in vorteilhafter Weise durch eine stabilisierende Grundwandung miteinander verbunden sind, so daß Flattergeräusche der ansonsten freien Dichtungswandungen im umströmenden Medium mit Sicherheit verhindert werden können.

Luftklappen der erfindungsgemäßen Art können nicht nur unmittelbar in einem Klima- bzw. Lüftungsgerät, sondern auch an Luftaustritten eines solchen Gerätes im Bereich der Fahrzeugkabine, z.B. an Düsen im Bereich des Armaturenbrettes, Anwendung finden.

## Patentansprüche

1. Luftklappe für eine Heiz- und/oder Klimaanlage, insbesondere in einem Kraftfahrzeug, mit einem Grundkörper (1) und einer angespritzten elastischen Dichtungsleiste (2), **dadurch gekennzeichnet,** daß die Dichtungsleiste (2) zumindest einen, in ihrer Erstreckungsrichtung verlaufenden, nach dem Gasinjektions-Verfahren hergestellten Hohlkörper (21) aufweist.

2. Luftklappe nach Anspruch 1, **dadurch gekennzeichnet,** daß an einen im wesentlichen plattenförmigen Grundkörper (1) die Dichtungsleiste (2) an die Randbereiche des Grundkörpers mit einem vor einer randseitigen Außenkante verlaufenden Hohlkörper (21) mit an diesen anschließenden einstückigen Haltewandteilen (22,23) angespritzt ist.

3. Luftklappe nach Anspruch 1, **dadurch gekennzeichnet,** daß die Kaltewandteile (22;23) an die randseitigen Bereiche der Oberflächen des Plattenförmigen Grundkörpers (1) aufgespritzt sind.

4. Luftklappe nach einem der Ansprüche 1-3, **dadurch gekennzeichnet,** daß die Dichtungsleiste (2) aus einem thermoplastischen Elastomer besteht.

5. Luftklappe nach einem der Ansprüche 1-4, **dadurch gekennzeichnet,** daß der Grundkörper (1) aus einem, insbesondere plattenförmigen harten Kunststoffteil besteht.

6. Luftklappe nach einem der Ansprüche 1-4, **dadurch gekennzeichnet,** daß der Grundkörper (1) aus einem, insbesondere plattenförmigen Metallteil besteht.

7. Luftklappe nach einem der Ansprüche 1-6, **gekennzeichnet durch** einen im wesentlichen dreieckförmigen Hohlkörper (21) mit zwei zueinander spitzwinklig zu dem Grundkörper (1) verlaufenden Dichtungswandungen und eine diesen verbindende Grundwandung .

8. Luftklappe nach einem der Ansprüche 1-6, **gekennzeichnet durch** einen unsymmetrischen Hohlkörper (21) .

## Claims

1. An air damper for a heating and/or air conditioning installation, in particular in a motor vehicle, having a base member (1) and a moulded-in elastic sealing strip (2),
**characterised in that** the sealing strip (2) has at least one hollow member (21) which extends in its direction of extension and is manufactured by the gas injection process.

2. An air damper according to Claim 1,
**characterised in that** at a substantially plate-shaped base member (1) the sealing strip (2) is moulded onto the edge regions of the base member with a hollow member (21) extending in front of an edge-side outer edge having single-piece retaining wall parts (22, 23) adjoining them.

3. An air damper according to Claim 1,
**characterised in that** the retaining wall parts (22; 23) are injected onto the edge-side regions of the surfaces of the plate-shaped base member (1).

4. An air damper according to one of Claims 1 - 3,
**characterised in that** the sealing strip (2) is made from a thermoplastic elastomer.

5. An air damper according to one of Claims 1 - 4,
**characterised in that** the base member (1) is made from a hard plastic part, which is in particular plate-shaped.

6. An air damper according to one of Claims 1 - 4,
**characterised in that** the base member (1) is made from a metal part, which is in particular plate-shaped.

7. An air damper according to one of Claims 1 - 6,
**characterised by** a substantially triangular hollow member (21) having two seal walls extending at an acute angle to one another towards the base member (1) and a base wall connecting them.

8. An air damper according to one of Claims 1 - 6,
**characterised by** an asymmetrical hollow member (21).

## Revendications

1. Volet pour une installation de chauffage et/ou de climatisation, en particulier de véhicules automobiles, avec un corps de base (1) et un joint d'étanchéité (2) élastique moulé par injection, **caractérisé en ce que** le joint d'étanchéité (2) présente au moins un corps creux (21), orienté dans son sens d'extension et réalisé par le procédé d'injection au gaz.

2. Volet selon la revendication 1, **caractérisé en ce que** le joint d'étanchéité (2) est moulé sur les bords du corps de base (1) sensiblement en forme de plaque, avec un corps creux (21) s'étendant en avant d'une arête extérieure du côté du bord et pourvu de parois de maintien (22,23) d'un seul tenant qui lui sont reliés.

3. Volet selon la revendication 1, **caractérisé en ce que** les parois de maintien (22, 23) sont moulées sur les zones de bord des surfaces du corps de base (1) en forme de plaque.

4. Volet selon l'une quelconque des revendications 1 à 3, **caractérisé en ce que** le joint d'étanchéité (2) se compose d'un élastomère thermoplastique.

5. Volet selon l'une quelconque des revendications 1 à 4, **caractérisé en que** le corps de base (1) se compose d'une pièce de plastique dur, en particulier en forme de plaque.

6. Volet selon l'une quelconque des revendications 1 à 4, **caractérisé en que** le corps de base (1) se compose d'une pièce en métal, en particulier en forme de plaque.

7. Volet selon l'une quelconque des revendications 1 à 6, **caractérisé en que** comporte un corps creux (21) sensiblement triangulaire pourvu de deux parois d'étanchéité s'étendant à angle aigu l'une par rapport à l'autre en direction du corps de base (1), et une paroi de base reliant celles-ci.

8. Volet selon l'une quelconque des revendications 1 à 6, **caractérisé en ce qu'**il comporte un corps creux asymétrique (21).
